# EUROPEAN PATENT APPLICATION

(11) **EP 2 275 518 A1**
(43) Date of publication of application: **19.01.2011**
(21) Application number: 09735304.9
(22) Date of filing: 13.04.2009
(51) Int. Cl.: C10L 1/189, C10L 1/02, C10L 1/222

(54) **LOW-TEMPERATURE FLUIDITY IMPROVER FOR BIODIESEL FUEL**

(30) Priority: 25.04.2008 JP 2008115506; 25.04.2008 JP 2008115513
(71) Applicant: Adeka Corporation, Tokyo 116-8554 (JP)
(72) Inventor: SUGIURA, Yuki, Tokyo 116-8554 (JP); NAMIKI, Masato, Tokyo 116-8554 (JP)
(74) Representative: HOFFMANN EITLE
(86) International application number: PCT/JP2009/057442
(87) International publication number: WO 2009/131024

(57) **Abstract**

Provided is a low-temperature fluidity improver capable of efficiently improving the low-temperature fluidity of a biodiesel fuel. The low-temperature fluidity improver for biodiesel fuels includes a specific aromatic carboxylic acid-based compound.

## Description

### Technical Field

The present invention relates to a low-temperature fluidity improver for biodiesel fuels containing a fatty acid methyl ester.

### Background Art

Fossil fuels such as gasoline, light oil, and kerosene have been mainly used as fuel oils. However, the consumption of those fuels results in the emission of carbon dioxide to the atmosphere, and such emissions are considered as a main cause for environmental problems such as global warming. In view of the foregoing, various methods have been proposed for reducing the emissions of carbon dioxide to the environment.

The use of biofuels has been proposed as one of the methods. Biofuels are fuel oils obtained mainly from plants, and they either 100% ethanol, methanol, fatty acid methyl ester or the like, or mixtures with fossil fuels for use in automobiles and the like. Since biofuels are produced from plants that consume carbon dioxide in the atmosphere, even when biofuels emit carbon dioxide to the atmosphere by combustion, new plants serving as the material for biofuels consume the carbon dioxide thus emitted. As a result, the amount of carbon dioxide in the atmosphere does not increase. As described above, even though various efforts have started on such biofuels, since biofuels are ready as they are for existing engine systems, without the need for any engine modifications or the like, investigations have been most actively conducted on biodiesel fuels obtained by incorporating biofuels such as fatty acid methyl esters into fossil fuels.

For example, Patent Document 1 discloses a biodiesel fuel composition obtained by adding an antioxidant to a biodiesel fuel **characterized in that** the biodiesel fuel contains 1% or more of an oleic acid methyl ester and/or a linoleic acid methyl ester and contains one or more kinds of fatty acid methyl esters having 4 to 25 carbon atoms as a main component, and that the antioxidant is formed of a natural component and/or a synthetic component and is added at a ratio of 0.001% to 5% with respect to the total weight of the fatty acid methyl esters; and a method of using the biodiesel fuel composition **characterized in that** the biodiesel fuel composition is blended with light oil at a volume ratio of 0.1 to 100%.

However, since biodiesel fuels containing fatty acid methyl esters have a high pour point, and the fluidity of the fuels deteriorates when the fatty acid methyl ester is blended at a high concentration or when the concentration is low but the fuels are used in cold climates, the clogging of filters or pumps sometimes occur, and therefore, the widespread use of biodiesel fuels requires an improvement in low-temperature fluidity of the biodiesel fuels.

Under such circumstances, various low-temperature fluidity improvers for existing diesel fuels have been known. For example, Patent Document 2 discloses a low-temperature fluidity improver for a fuel oil containing a compound A represented by the following general formula (1) and a compound B represented by the following general formula (2) so that a weight ratio "(compound A):(compound B)" may be 1:99 to 50:50. 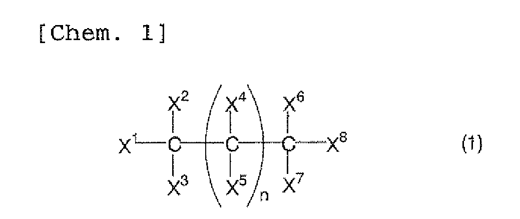 (wherein n represents an integer of 2 or more, and X¹ to X⁸ each independently represent hydrogen, a linear or branched hydrocarbon group, or a cyclic hydrocarbon group having 3 or more carbon atoms.) 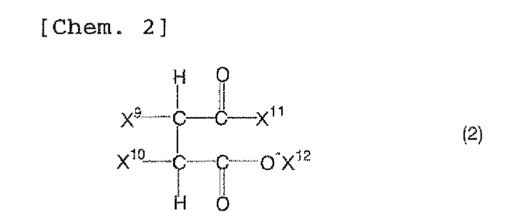 (wherein one of X⁹ and X¹⁰ represents a linear or branched hydrocarbon group having 8 to 24 carbon atoms and the other represents hydrogen, X¹¹ represents NR¹R² or HNR³, X¹² represents H⁺, HN⁺HR⁴R⁵, or HN⁺H₂R⁶, and R¹ to R⁶ each independently represent a hydrocarbon group having 8 to 24 carbon atoms.)

In addition, Patent document 3 discloses an oiliness improver for a low-sulfur light oil having a sulfur content of 0.05 wt% or less containing (A) a fatty acid selected from linear, saturated fatty acids each having 8 to 28 carbon atoms and linear, unsaturated fatty acids each having 8 to 28 carbon atoms and (B) at least one kind of modifier selected from pour point depressants and low-temperature fluidity improvers; and the oiliness improver for a low-sulfur light oil in which the low-temperature fluidity improvers are an ethylene-vinyl acetate copolymer, an ethylene-alkyl acrylate-based copolymer, chlorinated polyethylene, a polyalkyl acrylate, and an alkenyl succinamide.

### Prior Art Document

### Patent Document

Patent Document 1: JP 2007-16089 A
Patent Document 2: JP 2005-187581 A
Patent Document 3: JP H10-110175 A

### Summary of the Invention

### Problem to be solved by the Invention

However, such low-temperature fluidity improvers as described in Patent Documents 2 and 3 described above have limited effects on the biodiesel fuels, and hence low-temperature fluidity improvers for biodiesel fuel have been desired.

Therefore, an object of the present invention is to provide a low-temperature fluidity improver capable of efficiently improving the low-temperature fluidity of a biodiesel fuel.

### Means for Solving the Problems

As result of the extensive studies by the inventors of the present invention to solve the above problems, the present invention has been completed.
A low-temperature fluidity improver for biodiesel fuels of the present invention includes (i) a compound represented by the following general formula (1) as a component (A): 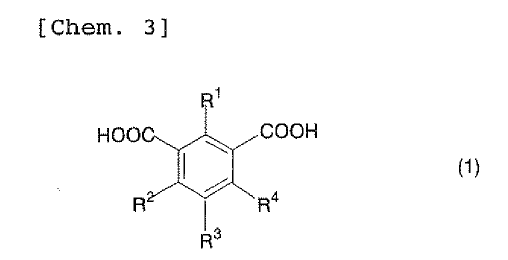 wherein R¹ and R³ each represent a hydrogen atom or a hydrocarbon group which may contain one or more atoms selected from sulfur atoms, oxygen atoms and nitrogen atoms, R² and R⁴ each represent a hydrogen atom, a carboxyl group, or a hydrocarbon group which may contain one or more atoms selected from sulfur atoms, oxygen atoms and nitrogen atoms, and R² and R³ or R³ and R⁴ may be bonded to each other to form a ring, provided that R² and R⁴ do not simultaneously represent carboxyl groups, and a compound represented by the following general formula (2) as a component (B): 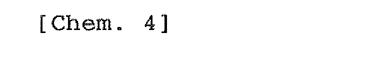 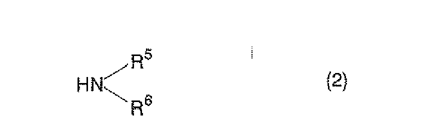 wherein R⁵ and R⁶ each represent a hydrogen atom or a hydrocarbon group which has 8 to 22 carbon atoms and which may contain oxygen atoms and/or nitrogen atoms, provided that R⁵ and R⁶ do not simultaneously represent hydrogen atoms; or (ii) an amide compound represented by the following general formula (3): 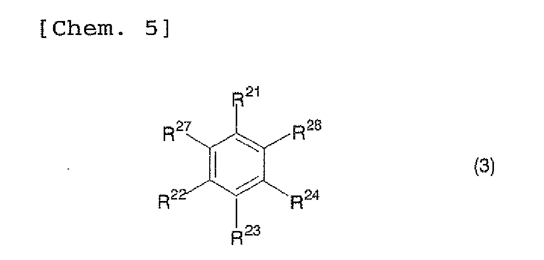 wherein R²¹ and R²³ each represent a hydrogen atom or a hydrocarbon which may contain one or more atoms selected from sulfur atoms, oxygen atoms and nitrogen atoms, R²² and R²⁴ each represent a hydrogen atom, a carboxyl group, a hydrocarbon group which may contain one or more atoms selected from sulfur atoms, oxygen atoms and nitrogen atoms, or a group represented by the following general formula (4) : 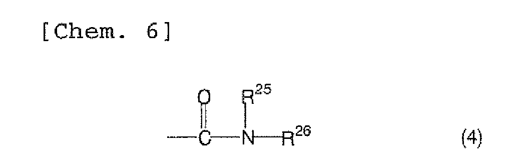 wherein R²⁵ and R²⁶ each represent a hydrogen atom or a hydrocarbon group which has 8 to 22 carbon atoms and which may contain one or more atoms selected from oxygen atoms and/or nitrogen atoms, provided that R²⁵ and R²⁶ do not simultaneously represent hydrogen atoms, and R²⁷ and R²⁸ each represent a carboxyl group or a group represented by the general formula (2), provided that R²² and R²³ or R²³ and R²⁴ may be bonded to each other to form a ring, and R²² and R²⁴ do not simultaneously represent carboxyl groups or groups represented by the general formula (4).

### Effect of the Invention

An effect of the present invention is to provide a low-temperature fluidity improver capable of efficiently improving the low-temperature fluidity of a biodiesel fuel.

### Embodiments for Carrying Out the Invention

A low-temperature fluidity improver for a biodiesel fuel of the present invention includes a component (A) formed of a compound represented by the general formula (1) and a component (B) formed of a compound represented by the general formula (2): 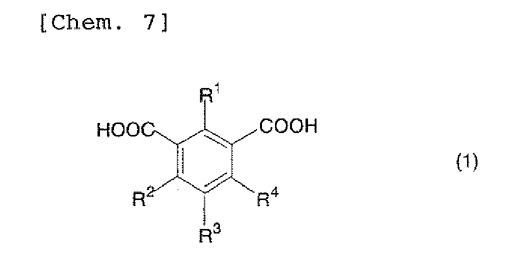 wherein R¹ and R³ each represent a hydrogen atom or a hydrocarbon group which may contain one or more atoms selected from sulfur atoms, oxygen atoms, and nitrogen atoms, R² and R⁴ each represent a hydrogen atom, a carboxyl group, or a hydrocarbon group which may contain one or more atoms selected from sulfur atoms , oxygen atoms and-nitrogen atoms, and R² and R³ or R³ and R⁴ may be bonded to each other to form a ring, provided that R² and R⁴ do not simultaneously represent carboxyl groups; and 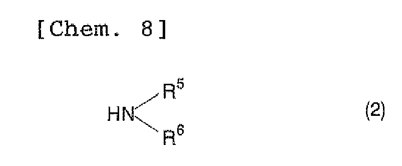 wherein R⁵ and R⁶ each represent a hydrogen atom or a hydrocarbon group which has 8 to 22 carbon atoms and which may contain oxygen atoms and/or nitrogen atoms, provided that R⁵ and R⁵ do not simultaneously represent hydrogen atoms.

In the compound represented by the above general formula (1), R¹ to R⁴ each represent a hydrogen atom or a hydrocarbon group which may contain one or more atoms selected from sulfur atoms, oxygen atoms, and nitrogen atoms, and further, R² and R⁴ may each represent a carboxyl group. Examples of those groups include hydrocarbon groups such as an alkyl group, alkenyl group, cycloalkyl group and aryl group; and hydrocarbon groups containing one or more groups selected from an ether group, ester group, amide group, hydroxyl group, thiol group and thioether group.

The alkyl group has 1 to 22, or preferably 1 to 12, carbon atoms, and examples of the group include a methyl group, ethyl group, propyl group, isopropyl group, butyl group, tert-butyl group, amyl group, isoamyl group, hexyl group, heptyl group, isoheptyl group, octyl group, isooctyl group, 2-ethylhexyl group, nonyl group, isononyl group, decyl group, dodecyl (lauryl) group, tridecyl group, tetradecyl (myristyl) group, pentadecyl group, hexadecyl (palmityl) group, heptadecyl group, octadecyl (stearyl) group, eicosyl group, docosyl group and the like.

The alkenyl group has 1 to 22, or preferably 1 to 12, carbon atoms, and examples of the group include a vinyl group, 1-methylethenyl group, 2-methylethenyl group, propenyl group, butenyl group, isobutenyl group, pentenyl group, hexenyl group, heptenyl group, octenyl group, decenyl group, pentadecenyl group, octadecenyl group and the like.

The cycloalkyl group has 5 to 10, or preferably 5 to 8, carbon atoms, and examples of the group include a cyclohexyl group, cyclopentyl group, cycloheptyl group, methylcyclopentyl group, methylcyclohexyl group, methylcycloheptyl group, cyclopentenyl group, cyclohexenyl group, cycloheptenyl group, methylcyclopetenyl group, methylcyclohexenyl group, methylcycloheptenyl group and the like.

The aryl group has 6 to 22, or preferably 6 to 12, carbon atoms, and examples of the group include a phenyl group, naphthyl group, 2-methylphenyl group, 3-methylphenyl group, 4-methylphenyl group, 4-vinylphenyl group, 3-isopropylphenyl group, 4-isopropylphenyl group, 4-butylphenyl group, 4-isobutylphenyl group, 4-tert-butylphenyl group, 4-hexylphenyl group, 4-cyclohexylphenyl group, 4-octylphenyl group, 4-(2-ethylhexyl)phenyl group, 4-dodecylphenyl group and the like.

Also, examples of the other groups include an oxyalkyl group, oxyalkenyl group, polyoxyethylene group, polyoxypropylene group, polyoxybutylene group, thioalkyl group, ester group-containing group represented by -R⁷OOCR⁸ (wherein R⁷ and R⁸ each represent an aliphatic hydrocarbon group having 1 to 21 carbon atoms), amide group-containing group represented by -R⁹NHCOR¹⁰ (wherein R⁹ and R¹⁰ each represent an aliphatic hydrocarbon group having 1 to 21 carbon atoms) and the like. Further, R² and R⁴ may each represent a carboxyl group, but R² and R⁴ do not simultaneously represent a carboxyl group.

In addition, R² and R³ or R³ and R⁴ may be bonded to each other to form a ring, and examples of such rings include benzene, naphthalene, anthracene, cyclopentadiene, furan, thiophene, pyrrole, imidazole, cyclopentane, cyclohexane, those rings having a substituent and the like.

Of R¹ to R⁴ described above, R¹ to R⁴ each preferably represent a hydrogen atom or an aliphatic hydrocarbon group having 1 to 8 carbon atoms, or all of them more preferably represent a hydrogen atom.

Also, the compound represented by the general formula (1) is a dicarboxylic acid or tricarboxylic acid having carboxyl groups at specific positions, but, when the compound does not have such a specific structure, the effect of improving the low-temperature fluidity of a biodiesel fuel disappears. The component (A) that can be used in the present invention is more affected by the position at which a carboxylic acid is added than by any other substituent. As long as the other substituents are electrically neutral, the performance of the component shows nearly no variation irrespective of the substituent.

A relationship between the structure of the compound represented by the general formula (1) as the component (A) and the performance is described in more detail. When all of R¹ to R⁴ represent a hydrogen atom, the compound represented by the general formula (1) is isophthalic acid (benzene-1,3-dicarboxylic acid). When R² or R⁴ represents a carboxyl group, the compound is trimellitic acid (benzene-1,2,4-tricarboxylic acid). Phthalic acid, terephthalic acid and the like are present as isomers of isophthalic acid, and hemimellitic acid, trimesic acid and the like are present as isomers of trimellitic acid. When those compounds are used in fossil fuels such as light oil and heavy oil, each compound exerts substantially equal performance as the low-temperature fluidity improver. However, in the case of biodiesel fuels containing 100 mass% of a fatty acid methyl ester or containing a mixture of a fatty acid methyl ester and light oil or the like, sufficient low-temperature fluidity improver effect cannot be obtained when the isomers such as phthalic acid, terephthalic acid, hemimellitic acid, trimesic acid and the like are used, and only low-temperature fluidity improvers using isophthalic acid or trimellitic acid exert sufficient effects.

In the compound represented by the above general formula (2), R⁵ and R⁶ each represent a hydrogen atom or a hydrocarbon group which has 8 to 22 carbon atoms and which may contain an oxygen atom and/or a nitrogen atom. Examples of the hydrocarbon group having 8 to 22 carbon atoms include alkyl groups such as an octyl group, isooctyl group, 2-ethylhexyl group, isononyl group, decyl group, isodecyl group, dodecyl (lauryl) group, tridecyl group, isotridecyl group, tetradecyl (myristyl) group, pentadecyl group, hexadecyl (palmityl) group, heptadecyl group, octadecyl (stearyl) group, eicosyl group, docosyl group and the like; alkenyl groups such as octenyl group, nonenyl group, decenyl group, undecenyl group, dodecenyl group, tridecenyl group, tetradecenyl group, pentadecenyl group, hexadecenyl group, heptadecenyl group, octadecenyl group, nonadecenyl group, eicosenyl group and the like; and aryl groups such as naphthyl group, 4-vinylphenyl group, 3-isopropylphenyl group, 4-isopropylphenyl group, 4-butylphenyl group, 4-isobutylphenyl group, 4-tert-butylphenyl group, 4-hexylphenyl group, 4-cyclohexylphenyl group, 4-octylphenyl group, 4-(2-ethylhexyl)phenyl group, 4-dodecylphenyl group and the like. Of those, a linear aliphatic hydrocarbon group having 10 to 20 carbon atoms is preferred because of its excellent pour point-depressing effect, and a linear alkyl group having 10 to 20 carbon atoms is more preferred.

Also, a linear aliphatic hydrocarbon group which has 8 to 22 carbon atoms and which may contain oxygen atoms and/or nitrogen atoms is, for example, an ester group-containing group represented by -R¹¹OOCR¹² (wherein R¹¹ and R¹² each represent an aliphatic hydrocarbon group having 1 to 21 carbon atoms), an amide group-containing group represented by -R¹³NHCOR¹⁴ (wherein R¹³ and R¹⁴ each represent an aliphatic hydrocarbon group having 1 to 21 carbon atoms), an alcohol represented by -R¹⁵OH (wherein R¹⁵ represents an aliphatic hydrocarbon group having 2 to 22 carbon atoms) and the like.

When both R⁵ and R⁶ described above represent an aliphatic hydrocarbon group which has 8 to 22 carbon atoms and which may contain oxygen atoms and/or nitrogen atoms, the component (B) is a secondary amine compound. When one of R⁵ and R⁶ represents a hydrogen atom, the component (B) is a primary amine compound.

The low-temperature fluidity improver for biodiesel fuel of the present invention is a mixture of the compound represented by general formula (1) as component (A) with the compound represented by general formula (2) as component (B) described above. However, when component (A) and component (B) are merely mixed, the obtained mixture is a neutralized salt. Here, when component (A) is a dicarboxylic acid, the component is defined as an isophthalic acid derivative, and when the component is a tricarboxylic acid, the component is defined as a trimellitic acid derivative. When component (A) is an isophthalic acid derivative, component (B) is preferably a secondary amine because performance as the low-temperature fluidity improver is favorable. In addition, when component (A) is a trimellitic acid derivative, component (B) is preferably a primary amine.

Next, a blending ratio between component (A) and component (B) is described. When component (A) is an isophthalic acid derivative, component (B) is blended in an amount of preferably 1 to 3 mol, more preferably 1.5 to 2.5 mol, or still more preferably 2 to 2.5 mol with respect to 1 mol of component (A). A blending amount of component (B) of less than 1 mol is not preferred because there may be no low-temperature fluidity improver effect exerted. A blending amount of the component in excess of 3 mol is not preferred either because an effect commensurate with the blending amount may not be obtained. In addition, when component (A) is a trimellitic acid derivative, component (B) is blended in an amount of preferably 1.5 to 4.5 mol, more preferably 2 to 4 mol, or still more preferably 3 to 3.5 mol with respect to 1 mol of component (A). A blending amount of component (B) of less than 1.5 mol is not preferred because there may be no low-temperature fluidity improver effect exerted. A blending amount of the component in excess of 4.5 mol is not preferred either because an effect commensurate with the blending amount may not be obtained.

Further, the low-temperature fluidity improver for biodiesel fuel of the present invention includes an amide compound represented by the following general formula (3): 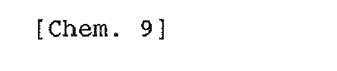 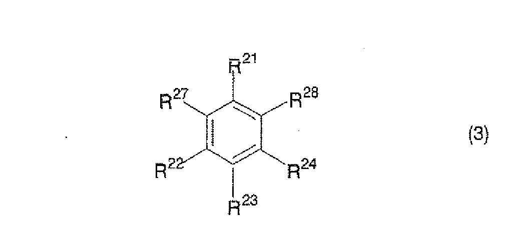 wherein R²¹ and R²³ each represent a hydrogen atom or a hydrocarbon which may contain one or more atoms selected from sulfur atoms, oxygen atoms and nitrogen atoms; R²² and R²⁴ each represent a hydrogen atom, a carboxyl group, a hydrocarbon group which may contain one or more atoms selected from sulfur atoms, oxygen atoms and nitrogen atoms, or a group represented by the following general formula (4): 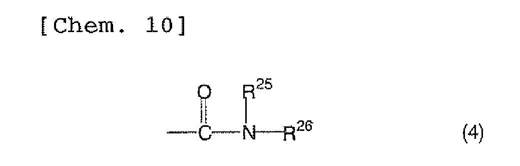 wherein R²⁵ and R²⁶ each represent a hydrogen atom or a hydrocarbon group which has 8 to 22 carbon atoms and which may contain one or more atoms selected from oxygen atoms and/or nitrogen atoms, provided that R²⁵ and R²⁶ do not simultaneously represent hydrogen atoms; and R²⁷ and R²⁸ each represent a carboxyl group or a group represented by the general formula (4), provided that R²² and R²³ or R²³ and R²⁴ may be bonded to each other to form a ring, and R²² and R²⁴ do not simultaneously represent carboxyl groups or groups represented by the general formula (4).

Here, the amide compound represented by the above general formula (3) may be obtained by a dehydration reaction of a compound represented by the following general formula (5): 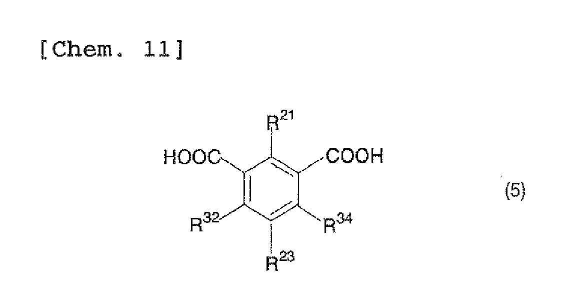 wherein R²¹ and R²³ each represent a hydrogen atom or a hydrocarbon group which may contain one or more atoms selected from sulfur atoms, oxygen atoms and nitrogen atoms; R³² and R³⁴ each represent a hydrogen atom, a carboxyl group, or a hydrocarbon group which may contain one or more atoms selected from sulfur atoms, oxygen atoms and nitrogen atoms; and R³² and R²³ or R²³ and R³⁴ may be bonded to each other to form a ring, provided that R³² and R³⁴ do not simultaneously represent carboxyl groups; with
a compound represented by the following general formula (6): 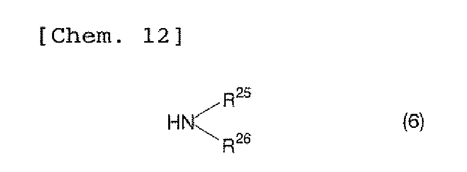 wherein R²⁵ and R²⁶ each represent a hydrogen atom or a hydrocarbon group which has 8 to 22 carbon atoms and which may contain oxygen atoms and/or nitrogen atoms, provided that R²⁵ and R²⁶ do not simultaneously represent hydrogen atoms.

In the above general formulae (3) and (5), R²¹ to R²⁴, and R³² and R³⁴ each represent a hydrogen atom or a hydrocarbon group which may contain one or more atoms selected from sulfur atoms, oxygen atoms and nitrogen atoms. In addition , R²², R²⁴, R³², and R³⁴ may each represent a carboxyl group, and further, R²² and R²⁴ may each represent a group represented by the general formula (4), provided that R²² and R²⁴ do not simultaneously represent carboxyl groups or groups represented by the general formula (4). Here, examples of the hydrocarbon group which may contain one or more atoms selected from sulfur atoms, oxygen atoms and nitrogen atoms include hydrocarbon groups such as an alkyl group, alkenyl group, cycloalkyl group, aryl group and the like; and hydrocarbon groups each containing one or more groups selected from an ether group, ester group, amide group, hydroxyl group, thiol group, and thioether group.

Examples of the alkyl group include the same groups as those exemplified for R¹ to R⁴ described above.

Examples of the alkenyl group include the same groups as those exemplified for R¹ to R⁴ described above.

Examples of the cycloalkyl group include the same groups as those exemplified for R¹ to R⁴ described above.

Examples of the aryl group include the same groups as those exemplified for R¹ to R⁴ described above.

In addition, examples of the other groups include an oxyalkyl group, oxyalkenyl group, polyoxyethylene group, polyoxypropylene group, polyoxybutylene group, thioalkyl group, ester group-containing group represented by -R³⁹OOCR⁴⁰ (wherein R³⁹ and R⁴⁰ each represent an aliphatic hydrocarbon group having 1 to 21 carbon atoms), amide group-containing group represented by -R⁴¹NHCOR⁴² (wherein R⁴¹ and R⁴² each represent an aliphatic hydrocarbon group having 1 to 21 carbon atoms) and the like. Further, in the general formula (3), R²², R²⁴, R²⁷ and R²⁸ may each represent a carboxyl group, but R² and R⁴ do not simultaneously represent carboxyl groups. Further, in the general formula (5), R³² and R³⁴ may each represent a carboxyl group, but R³² and R³⁴ do not simultaneously represent carboxyl groups.

In addition, in the general formula (3), R²² and R²³ or R²³ and R²⁴ may be bonded to each other to form a ring, and further, in the general formula (5), R³² and R²³ or R²³ and R³⁴ may be bonded to each other to form a ring. Examples of such rings include benzene, naphthalene, anthracene, cyclopentadiene, furan, thiophene, pyrrole, imidazole, cyclopentane, cyclohexane, these rings having a substituent and the like.

R²¹ to R²⁴, and R³² and R³⁴ described above preferably represent a hydrogen atom or an aliphatic hydrocarbon group having 1 to 8 carbon atoms, or all of them more preferably each represent a hydrogen atom.

In addition, the compound represented by the general formula (5) is a dicarboxylic acid or tricarboxylic acid having carboxyl groups at specific positions, but when the compound does not have such a specific structure, the effect of improving the low-temperature fluidity of a biodiesel fuel disappears. The compound represented by the general formula (5) that is a rawmaterial for the low-temperature fluidity improver of the present invention is more affected by the position at which a carboxylic acid is added than by any other substituent. As long as the other substituents are electrically neutral, the performance of the compound shows nearly no variation irrespective of the substituent.

A relationship between the structure of the compound represented by the general formula (5) and the performance is described in more detail. When all of R²¹, R²³, R³², and R³⁴ each represent a hydrogen atom, the compound represented by the general formula (5) is isophthalic acid (benzene-1,3 -dicarboxylic acid). When R³² or R³⁴ represents a carboxyl group, the compound is trimellitic acid (benzene-1,2,4-tricarboxylic acid). Phthalic acid, terephthalic acid and the like are present as isomers of isophthalic acid, and hemimellitic acid, trimesic acid and the like are present as isomers of trimellitic acid. When those compounds are used in fossil fuels such as light oil and heavy oil, each compound exerts substantially equal performance as the low-temperature fluidity improver. However, in the case of biodiesel fuels each containing 100 mass% of a fatty acid methyl ester or each containing a mixture of a fatty acid methyl ester and light oil or the like, sufficient low-temperature fluidity improver effect cannot be obtained even when the isomers such as phthalic acid, terephthalic acid, hemimellitic acid, and trimesic acid are used as raw materials, and only low-temperature fluidity improvers using isophthalic acid or trimellitic acid as a raw material exert sufficient effects.

Next, in the above general formulae (4) and (6), R²⁵ and R²⁶ each represent a hydrogen atom or a hydrocarbon group which has 8 to 22 carbon atoms and which may contain oxygen atoms and/or nitrogen atoms. Examples of the hydrocarbon group having 8 to 22 carbon atoms include alkyl groups such as an octyl group, isooctyl group, 2-ethylhexyl group, isononyl group, decyl group, isodecyl group, dodecyl (lauryl) group, tridecyl group, isotridecyl group, tetradecyl (myristyl) group, pentadecylgroup, hexadecyl (palmityl) group, heptadecyl group, octadecyl (stearyl) group, eicosyl group, docosyl group and the like; alkenyl groups such as octenyl group, nonenyl group, decenyl group, undecenyl group, dodecenyl group, tridecenyl group, tetradecenyl group, pentadecenyl group, hexadecenyl group, heptadecenyl group, octadecenyl group, nonadecenyl group, eicosenyl group and the like; and aryl groups such as naphthyl group, 4-vinylphenyl group, 3-isopropylphenyl group, 4-isopropylphenyl group, 4-butylphenyl group, 4-isobutylphenyl group, 4-tert-butylphenyl group, 4-hexylphenyl group, 4-cyclohexylphenyl group, 4-octylphenyl group, 4-(2-ethylhexyl)phenyl group, 4-dodecylphenyl group and the like. Of those, a linear aliphatic hydrocarbon group having 10 to 20 carbon atoms is preferred because of its excellent pour point-depressing effect, and a linear alkyl group having 10 to 20 carbon atoms is more preferred.

In addition, a linear aliphatic hydrocarbon group which has 8 to 22 carbon atoms and which may contain oxygen atoms and/or nitrogen atoms is, for example, an ester group-containing group represented by -R⁴³OOCR⁴⁴ (wherein R⁴³ and R⁴⁴ each represent an aliphatic hydrocarbon group having 1 to 21 carbon atoms), an amide group-containing group represented by -R⁴⁵NHCOR⁴⁶ (wherein R⁴⁵ and R⁴⁶ each represent an aliphatic hydrocarbon group having 1 to 21 carbon atoms), an alcohol represented by -R⁴⁷OH (wherein R⁴⁷ represents an aliphatic hydrocarbon group having 2 to 22 carbon atoms) and the like.

In the general formula (6), when both R²⁵ and R²⁶ described above each represent an aliphatic hydrocarbon group which has 8 to 22 carbon atoms and which may contain oxygen atoms and/or nitrogen atoms, the compound of the general formula (6) is a secondary amine compound. When one of R²⁵ and R²⁶ represents a hydrogen atom, the compound of the general formula (6) is a primary amine compound.

The low-temperature fluidity improver for biodiesel fuel of the present invention contains the amide compound represented by the general formula (3) described above. The amide compound can be obtained by blending the compound represented by the general formula (5) with the compound represented by the general formula (6) at an arbitrary ratio , and subjecting it to a dehydration reaction. When the compound represented by the general formula (5) is an isophthalic acid derivative, the compound represented by the general formula (6) is subjected to the dehydration reaction in an amount of preferably 1 to 3 mol, more preferably 1.5 to 2.5 mol, or still more preferably 2 to 2.5 mol with respect to mol of the compound represented by the general formula (5). An amount of the compound represented by the general formula (6) of less than 1 mol is not preferred because there may be no low-temperature fluidity improver effect exerted. An amount of the compound in excess of 3 mol is not preferred either because an effect commensurate with the addition amount may not be obtained. In addition, when the compound represented by the general formula (5) is a trimellitic acid derivative, the compound represented by the general formula (6) is subjected to the dehydration reaction in an amount of preferably 1.5 to 4.5 mol, more preferably 2 to 4 mol, or still more preferably 3 to 3.5 mol with respect to 1 mol of the compound represented by the general formula (5). An amount of the compound represented by the general formula (6) of less tan 1.5 mol is not preferred because there may be no low-temperature fluidity improver effect exerted. An amount of the compound in excess of 4.5 mol is not preferred either because an effect commensurate with the addition amount may not be obtained.

Any one of the known amidation reactions can be employed as a specific method for the dehydration reaction for producing the amide compound, and examples of the method include a method involving mixing the compounds represented by the general formulae (5) and (6), and subjecting the mixture to a dehydration reaction at 100 to 350°C under a reduced pressure of 1 to 30 kPa for about 1 to 30 hours; and a method involving adding a catalyst to the mixture and subjecting the resultant mixture to a dehydration reaction at 100 to 350°C under a reduced pressure of 1 to 30 kPa for about 1 to 30 hours.

Examples of the above-mentioned catalyst include strong acids such as sulfuric acid, toluenesulfonic acid and the like; metal halides such as titanium tetrachloride, hafnium chloride, zirconium chloride, aluminum chloride, gallium chloride, indium chloride, iron chloride, tin chloride, boron fluoride and the like; hydroxides, alcoholates and carbonates of alkali metals and alkaline earth metals such as sodium hydroxide, potassium hydroxide, sodium methylate, sodium carbonate and the like; metal oxides such as aluminum oxide, calcium oxide, barium oxide, sodium oxide and the like; and organometallic compounds such as tetraisopropyl titanate, dibutyltin dichloride, dibutyltin oxide and the like. When the catalyst is used, a hydroxide of an alkali metal or alkaline earth metal, or an organometallic compound is preferably used as the catalyst because of its good reactivity. The addition amount of the catalyst is preferably 0.1 to 5 mass% or more preferably 0.2 to 3 mass% with respect to the total amount of reactants. However, the dehydration reaction is preferably performed without the use of any catalyst in consideration of the removal of a catalyst after the reaction.

It should be noted that, upon performance of the dehydration reaction, all carboxyl groups in the compound represented by the general formula (5) are preferably subjected to the reaction. The compound represented by the general formula (6) is preferably charged in an excess amount in order that a compound in which all the carboxyl groups are subjected to the reaction may be synthesized. In this case, even when the compound represented by the general formula (6) that is unreacted remains, performance as a low-temperature fluidity improver presents no problem as long as the amount falls within the above-mentioned preferred range. Alternatively, part of the carboxyl groups in the compound represented by the general formula (5) can be subjected to a dehydration reaction with the compound represented by the general formula (6), and the remaining unreacted carboxyl groups can be neutralized with the compound represented by the general formula (6).

The term "biodiesel fuel" as used herein refers to a fuel consisting of 100 mass% of a fatty acidmethyl ester or containing light oil and a fatty acid methyl ester, and any one of the general light oils that can be used in diesel engines such as light oil No. 1, light oil No. 2, and light oil No. 3 standardized in JIS K2204 can be used as the light oil.

In addition, any one of the fatty acid methyl esters using natural fats and oils obtained from plants as raw materials, the fatty acid methyl esters using natural fats and oils obtained from animals as raw materials, and the fatty acid methyl esters using waste food oils obtained from those food oils as raw materials can be used as the fatty acid methyl ester. Examples of the plant-based natural fats and oils include linseed oil, perilla oil, oiticica oil, olive oil, cacao butter, kapok oil, white mustard oil, sesame oil, rice bran oil, safflower oil, shea nut oil. Chinese wood oil, soybean oil, Camellia sinensis seed oil, Camellia japonica seed oil, corn oil, rapeseed oil, palm oil, palm kernel oil, castor oil, sunflower oil, cottonseed oil, coconut oil, Japan wax, peanut oil and the like, and mixtures of them. The fatty acid methyl ester may be produced by any one of the known methods, and a production method for the ester is, for example, a method involving heating any of the above-mentioned natural fats and oils, and methanol in the presence of an alkali catalyst such as sodium hydroxide or potassium hydroxide to perform ester exchange, and removing glycerin produced as an impurity to obtain the ester.

When the light oil and the fatty acid methyl ester are blended, the blending is preferably performed so that the fatty acid methyl ester may account for 2 mass% or more of the total amount of the biodiesel fuel. A blending amount of the fatty acid methyl ester of less than 2 mass% is not preferred because an essential object of the biodiesel fuel, i.e., a reduction in the amount of carbon dioxide emitted through the curtailment of the usage of a fossil fuel cannot be achieved, and hence the raison d'etre of the biodiesel fuel is lessened.

A biodiesel fuel composition of the present invention contains the above-mentioned biodiesel fuel and the low-temperature fluidity improver of the present invention. Although the blending amount of the low-temperature fluidity improver of the present invention with respect to the biodiesel fuel is not particularly limited, the improver is blended in an amount of preferably 0.005 to 3 mass% or more preferably 0.01 to 1 mass% with respect to the total amount of the biodiesel fuel. A blending amount of less than 0.005 mass% is not preferred because sufficient effect may not appear and a blending amount in excess of 3 mass% is not preferred either because an effect commensurate with the blending amount may not be obtained or insoluble matter may be generated depending on the kind of biodiesel fuel.

The biodiesel fuel composition of the present invention can be blended with a cetane number improver as required. Any one of the various compounds known as cetane number improvers for light oil can be arbitrarily used as the cetane number improver, and examples of the compounds include 2-chloroethyl nitrate, 2-ethoxyethyl nitrate, isopropyl nitrate, butyl nitrate, primary amyl nitrate, secondary amyl nitrate, isoamyl nitrate, primary hexyl nitrate, secondary hexyl nitrate, n-heptyl nitrate, n-octyl nitrate, 2-ethylhexyl nitrate, cyclohexyl nitrate, ethylene glycol dinitrate and the like. An alkyl nitrate having 6 to 8 carbon atoms is particularly preferred. The cetane number improver is blended in an amount ranging from 500 to 1400 mass ppm, preferably 600 to 1250 mass ppm, or more preferably 700 to 1100 mass ppm with respect to the total amount of the biodiesel fuel composition. When the cetane number improver is blended, a blending amount of the improver of less than 500 mass ppm is not preferred because a sufficient cetane number-improving effect cannot be obtained, and the amounts of particulate matter (PM), aldehydes, and further, NOₓ in a diesel engine exhaust gas cannot be sufficiently reduced. Also, a blending amount of the cetane number improver in excess of 1400 mass ppm is not preferred either because an effect commensurate with the amount cannot be expected and the amount is economically disadvantageous.

In addition, the biodiesel fuel composition of the present invention can be blended with a detergent as required. Examples of the detergent include imide-based compounds; alkenyl succinimides such as polybutenyl succinimides synthesized from polybutenyl succinic anhydride with ethylene polyamines ; succinates such as polybutenyl succinates synthesized from polyhydric alcohols such as pentaerythritol with polybutenyl succinic anhydride; copolymer-based polymers such as a copolymer of a dialkylaminoethyl methacrylate, polyethylene glycol methacrylate, vinyl pyrrolidone, or the like with an alkyl methacrylate; and ashless detergents such as reaction products of carboxylic acids with amines. Of those, the alkenyl succinimides, and the reaction products of carboxylic acids with amines are preferred. One kind of such detergents can be used alone, or two or more kinds can be used in combination. Although the blending amount of the detergent is not particularly limited, the detergent is blended in an amount ranging from 30 to 300 mass ppm or preferably 60 to 200 mass ppm with respect to the total amount of the biodiesel fuel composition in order to derive an effect from blending the detergent, specifically, the effect of suppressing the clogging of fuel injection nozzles. A blending amount of the detergent of less than 30 mass ppm is not preferred because the above-mentioned effect may not be expressed and a blending amount of the detergent in excess of 300 mass ppm is not preferred either because an effect commensurate with the amount cannot be expected. Further the amounts of NOₓ, PM, aldehydes and the like in a diesel engine exhaust gas may be increased instead.

Further, one kind of other known fuel oil additives can be added alone to the biodiesel fuel composition of the present invention, or several kinds of them can be added in combination to the composition for the purpose of additionally improving the performance of the composition. Examples of other additives include solvents such as methanol, ethanol, propanol, butanol, hexane, toluene and the like; antioxidants such as phenol- and amine-based antioxidants and the like; metal deactivators such as a salicylidene derivative and the like; deicing agents such as polyglycol ether; corrosion inhibitors such as an aliphatic amine, an alkenyl succinate and the like; anionic, cationic, and amphoteric surfactants; colorants such as an azo dye and the like; and defoaming agents such as a silicon-based defoaming agent and the like. Although the blending amount of each of the other additives is not particularly limited, the additive is blended in an amount ranging from 0.001 to 0.5 mass% or preferably 0.001 to 0.2 mass% with respect to the total amount of the biodiesel fuel composition.

### Examples

Hereinafter, the present invention is described specifically by way of examples. Further, in the following examples and so on, the term "%" means a mass standard unless otherwise specified.

### Example 1

Hereinafter, compounds as component (A) and component (B) used in the example are described. Also, the term "neutralized salt" refers to a mixture of component (A) and component (B).

Low-temperature fluidity improver
(a-1) A neutralized salt formed of isophthalic acid and didodecylamine at a molar ratio of 1:2
(a-2) A neutralized salt formed of isophthalic acid and distearylamine at a molar ratio of 1:2
(a-3) A neutralized salt formed of isophthalic acid and didecylamine at a molar ratio of 1:2
(a-4) A neutralized salt formed of isophthalic acid and dodecylamine at a molar ratio of 1:2
(a-5) A neutralized salt formed of trimellitic acid and dodecylamine at a molar ratio of 1:3
(a-6) A neutralized salt formed of isophthalic acid and didodecylamine at a molar ratio of 1:1.5
(a-7) A neutralized salt formed of isophthalic acid and didodecylamine at a molar ratio of 1:2.5
(b-1) A neutralized salt formed of phthalic acid and didodecylamine at a molar ratio of 1:2
(b-2) A neutralized salt formed of terephthalic acid and didodecylamine at a molar ratio of 1:2
(b-3) A polymethacrylate-based pour point depressant (having a weight-average molecular weight of 400,000)
(b-4) An ethylene-vinyl acetate copolymer (having an ethylene content of 65 mass%, a vinyl acetate content of 35 mass%, and a weight-average molecular weight of 3500)
(b-5) A mixture containing Normal Paraffin Wax 140 manufactured by NIPPON SEIRO CO., LTD. having a melting point of 61° C, a penetration at 25°C of 11, and a weight-average molecular weight measured by gas chromatography of 404; and a succinic acid derivative at a mass ratio of 20:80

The succinic acid derivative in the product (b-5) was synthesized by the following method.
First, 210 g (1 mol) of octenyl succinic anhydride having a neutralization value of 535 mgKOH/g was charged into a reaction apparatus equipped with a stirring device, a nitrogen-blowing tube and a condenser, and then stirred. While the stirring was continued, 470 g (1.8 mol) of hydrogenated tallow amines having a total amine value of 215 mgKOH/g (Fermin T manufactured by Kao Corporation, monoalkylamines whose representative composition was such that an alkyl group having 14 carbon atoms accounted for 4%, an alkyl group having 16 carbon atoms accounted for 30%, and an alkyl group having 18 carbon atoms accounted for 66%) were charged into the apparatus, then the temperature of the mixture was increased to 80° C, and the mixture was aged at 80° C for 3 hours to obtain the targeted succinic acid derivative.

### <Pour point test>

Biodiesel fuel compositions were prepared by using the above-mentioned low-temperature fluidity improvers according to the blending ratios shown in Table 1 with a base oil 1 (containing 100% of a waste food oil-derived fatty acid methyl ester) or a base oil 2 (light oil containing 5% of a waste food oil-derived fatty acid methyl ester), and were then subjected to measurement by the method described in JIS K2269 "testing methods for pour point and cloud point of crude oil and petroleum products." That is, 45 ml of a sample (biodiesel fuel composition) was charged into a test tube and heated to 45° C. Next, the sample was cooled with a cooling bath. Every time the temperature of the sample was reduced by 2.5° C, the test tube was taken out of the cooling bath and tilted. The temperature at which the sample did not move at all for 5 seconds was read, and a value obtained by adding 2.5° C to the read value was defined as the pour point. Further, the light oil used in the experiment corresponded to light oil No.1 standardized in JIS K2204.

[Table 1]

**Table 1**

| | Additive | Addiction amount (%) | Base oil 1 | Base oil 2 | Light oil |
|---|---|---|---|---|---|
| | | | Pour point (° C) | Pour point (° C) | Pour point (° C) |
| Example | a-1 | 0.5 | -35.0 | -27.5 | -12.5 |
| | a-2 | 0.5 | -30.5 | -25.0 | |
| | a-3 | 0.5 | -22.5 | -22.5 | |
| | a-4 | 0.5 | -17.5 | -20.0 | |
| | a-5 | 0.5 | -17.5 | -20.0 | -12.5 |
| | a-6 | 0.5 | -27.5 | -22.5 | |
| | a-7 | 0.5 | -32.5 | -25.0 | |
| | a-1 | 0.1 | -22.5 | -17.5 | |
| | a-1 | 1.0 | -35.0 | -32.5 | |
| Comparative Example | None | - | -5.0 | -7.5 | -7.5 |
| | b-1 | 0.5 | -5.0 | -12.5 | -12.5 |
| | b-2 | 0.5 | -7.5 | -10.0 | -12.5 |
| | b-3 | 0.5 | -5.0 | -12.5 | |
| | b-4 | 0.5 | -7.5 | -7.5 | |
| | b-5 | 0.5 | -10.0 | -12.5 | |

As can be seen from Table 1, the biodiesel fuel compositions using the low-temperature fluidity improvers of the present invention (a-1 to a-7) each have a lowered pour point and improved low-temperature fluidity. In addition, it can be seen that denatured products of any of phthalic acid, isophthalic acid, terephthalic acid, and trimellitic acid merely only exert the same effect on the light oil, and that only the denatured products of isophthalic acid or trimellitic acid have a specific effect on a biodiesel fuel.

### Example 2

Hereinafter, amide compounds used in the example are described.

### (Method of synthesizing amide compound)

First, 166 g (1 mol) of isophthalic acid and 706 g (2 mol) of didodecylamine were charged into a 2000-ml flask equipped with a nitrogen-introducing tube, a reflux tube, a stirring device and a thermometer. Then, the temperature of the mixture was slowly increased to 180°C, and further, the pressure in the flask was gradually reduced to 10 kPa while water produced by the reaction was removed. After the pressure had reached 10 kPa, the mixture was subjected to a reaction at the temperature for 3 hours, to thus obtain an amide compound (c-1). Further, it was confirmed that all carboxyl groups in isophthalic acid were reacted. Amide compounds (c-2) to (c-4) were obtained by the same operation.

Low-temperature fluidity improver
(c-1) An amide compound obtained from isophthalic acid and didodecylamine at a molar ratio of 1:2
(c-2) An amide compound obtained from isophthalic acid and didecylamine at a molar ratio of 1:2
(c-3) An amide compound obtained from isophthalic acid and distearylamine at a molar ratio of 1:2
(c-4) An amide compound obtained from trimellitic acid and dodecylamine at a molar ratio of 1:3
(d-1) An amide compound obtained from phthalic acid and didodecylamine at a molar ratio of 1:2
(d-2) An amide compound obtained from terephthalic acid and didodecylamine at a molar ratio of 1:2
(d-3) An amide compound obtained from hemimellitic acid and didodecylamine at a molar ratio of 1:3
(d-4) A polymethacrylate-based pour point depressant (having a weight-average molecular weight of 400,000)
(d-5) An ethylene-vinyl acetate copolymer (having an ethylene content of 65 mass%, a vinyl acetate content of 35 mass%, and a weight-average molecular weight of 3500)
(d-6) A mixture containing Normal Paraffin Wax 140 manufactured by NIPPON SEIRO CO., LTD. having a melting point of 61° C, a penetration at 25°C of 11, and a weight-average molecular weight measured by gas chromatography of 404; and a succinic acid derivative at a mass ratio of 20:80

The succinic acid derivative in the product (d-6) was synthesized in the same manner as in the above-mentioned product (b-5).

### <Pour point test>

Biodiesel fuel compositions were prepared by using the above-mentioned low-temperature fluidity improvers according to the formulations shown in Table 2 with the same base oil 1 or base oil 2 as that in Example 1, and were then measured for their pour points in the same manner as in Example 1.

[Table 2]

**Table 2**

| | Additive | Addition amount (%) | Base oil 1 | Base oil 2 | Light oil |
|---|---|---|---|---|---|
| | | | Pour point (° C) | Pour point (° C) | Pour point (° C) |
| Example | c-1 | 0.5 | -45.0 | -35.0 | -12.5 |
| | c-2 | 0.5 | -35.0 | -25.0 | |
| | c-3 | 0.5 | -30.0 | -22.5 | |
| | c-4 | 0.5 | -22.5 | -22.5 | -12.5 |
| Comparative Example | None | - | -5.0 | -7.5 | -7.5 |
| | d-1 | 0.5 | -5.0 | -12.5 | -12.5 |
| | d-2 | 0.5 | -7.5 | -10.0 | -12.5 |
| | d-3 | 0.5 | -5.0 | -10.0 | -12.5 |
| | d-4 | 0.5 | -5.0 | -12.5 | |
| | d-5 | 0.5 | -7.5 | -7.5 | |
| | d-6 | 0.5 | -10.0 | -12.5 | |

As can be seen from Table 2, the biodiesel fuel compositions using the low-temperature fluidity improvers of the present invention (c-1 to c-4) each have a lowered pour point and improved low-temperature fluidity. In addition, it can be seen that amide compounds of any of phthalic acid, isophthalic acid, terephthalic acid, and trimellitic acid merely only exert the same effect on the light oil, and that only the amide compounds of isophthalic acid or trimellitic acid have a specific effect on a biodiesel fuel.

### Industrial Applicability

The low-temperature fluidity improver for biodiesel fuels of the present invention can be suitably used for improving the low-temperature fluidity of a biodiesel fuel containing a fatty acid methyl ester.

## Claims

1. A low-temperature fluidity improver for biodiesel fuels, comprising:
(i) a compound represented by the following general formula (1) as a component (A): 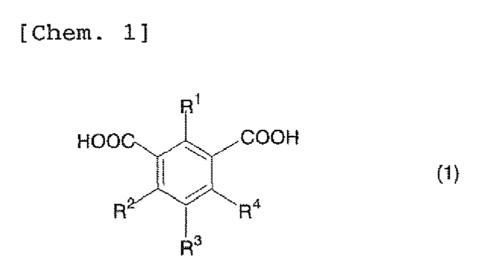 wherein R¹ and R³ each represent a hydrogen atom or a hydrocarbon group which may contain one or more atoms selected from sulfur atoms, oxygen atoms and nitrogen atoms, R² and R⁴ each represent a hydrogen atom, a carboxyl group, or a hydrocarbon group which may contain one or more atoms selected from sulfur atoms, oxygen atoms and nitrogen atoms, and R² and R³ or R³ and R⁴ may be bonded to each other to form a ring, provided that R² and R⁴ do not simultaneously represent carboxyl groups, and
a compound represented by the following general formula (2) as a component (B): 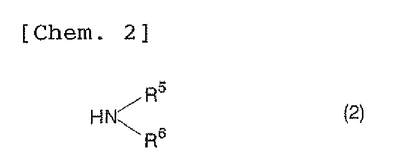 wherein R⁵ and R⁶ each represent a hydrogen atom or a hydrocarbon group which has 8 to 22 carbon atoms and which may contain oxygen atoms and/or nitrogen atoms, provided that R⁵ and R⁶ do not simultaneously represent hydrogen atoms; or
(ii) an amide compound represented by the following general formula (3): 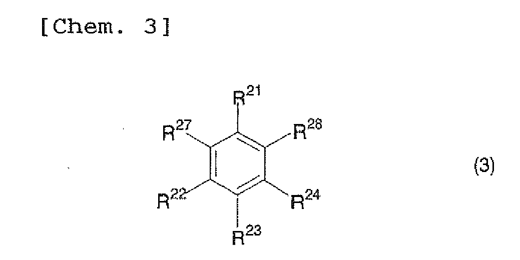 wherein R²¹ and R²³ each represent a hydrogen atom or a hydrocarbon which may contain one or more atoms selected from sulfur atoms, oxygen atoms and nitrogen atoms, R²² and R²⁴ each represent a hydrogen atom, a carboxyl group, a hydrocarbon group which may contain one or more atoms selected from sulfur atoms, oxygen atoms and nitrogen atoms, or a group represented by the following general formula (4) : 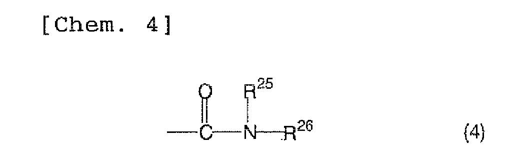 wherein R²⁵ and R²⁶ each represent a hydrogen atom or a hydrocarbon group which has 8 to 22 carbon atoms and which may contain one or more atoms selected from oxygen atoms and/or nitrogen atoms, provided that R²⁵ and R²⁶ do not simultaneously represent hydrogen atoms, and R²⁷ and R²⁸ each represent a carboxyl group or a group represented by the general formula (2), provided that R²² and R²³ or R²³ and R²⁴ may be bonded to each other to form a ring, and R²² and R²⁴ do not simultaneously represent carboxyl groups or groups represented by the general formula (4).

2. A low-temperature fluidity improver for biodiesel fuels according to claim 1, wherein the compound represented by the general formula (1) comprises isophthalic acid or trimellitic acid.

3. A low-temperature fluidity improver for biodiesel fuels according to claim 1, wherein R⁵ and R⁶ in the compound represented by the general formula (2) each represent a hydrogen atom or a linear alkyl group having 8 to 16 carbon atoms.

4. A low-temperature fluidity improver for biodiesel fuels according to claim 1, wherein, in the compound represented by the general formula (3), R²¹, R²², R²³, and R²⁴ each represent a hydrogen atom, or R²¹ and R²³ each represent a hydrogen atom, and one of R²² and R²⁴ represents a hydrogen atom and the other represents a carboxyl group.

5. A low-temperature fluidity improver for biodiesel fuels according to claim 1, wherein R²⁵ and R²⁶ in the general formula (4) each represent a hydrogen atom or a linear alkyl group having 8 to 16 carbon atoms.

6. A low-temperature fluidity improver for biodiesel fuels according to claim 1, wherein the amide compound represented by the general formula (3) comprises a compound obtained by a dehydration reaction of
a compound represented by the following general formula (5): 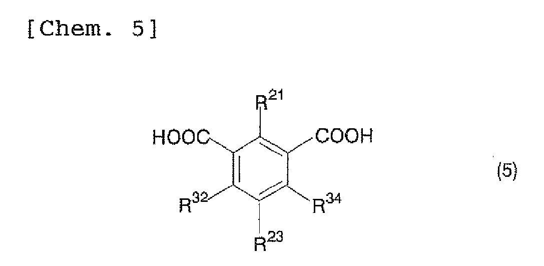 wherein R²¹ and R²³ each represent a hydrogen atom or a hydrocarbon group which may contain one or more atoms selected from sulfur atoms, oxygen atoms and nitrogen atoms, R³² and R³⁴ each represent a hydrogen atom, a carboxyl group, or a hydrocarbon group which may contain one ormore atoms selected from sulfur atoms, oxygen atoms and nitrogen atoms, and R³² and R²³ or R²³ and R³⁴ may be bonded to each other to form a ring, provided that R³² and R³⁴ do not simultaneously represent carboxyl groups; with
a compound represented by the following general formula (6) : 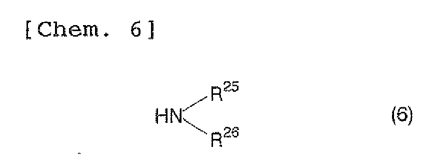 wherein R²⁵ and R²⁶ each represent a hydrogen atom or a hydrocarbon group which has 8 to 22 carbon atoms and which may contain an oxygen atoms and/or a nitrogen atoms, provided that R²⁵ and R²⁶ do not simultaneously represent hydrogen atoms.

7. A low-temperature fluidity improver for biodiesel fuels according to claim 6, wherein, in the compound represented by the general formula (5), R²¹, R³², R²³, and R³⁴ each represent a hydrogen atom, or R²¹ and R²³ each represent a hydrogen atom, and one of R³² and R³⁴ represents a hydrogen atom and the other represents a carboxyl group.

8. A low-temperature fluidity improver for biodiesel fuels according to claim 6, wherein R²⁵ and R²⁶ in the general formula (6) each represent a hydrogen atom or a linear alkyl group having 8 to 16 carbon atoms.

9. A biodiesel fuel composition, comprising:
the low-temperature fluidity improver for a biodiesel fuel according to any one of claim 1 to claim 8; and
a biodiesel fuel.

10. A biodiesel fuel composition according to claim 9, further comprising a cetane number improver and/or a detergent.

11. A biodiesel fuel composition according to claim 9, further comprising one or more kinds of other additives selected from the group consisting of a solvent, an antioxidant, a metal deactivator, a deicing agent, a corrosion inhibitor, an antistatic agent, a colorant, and a defoaming agent.
